# EUROPEAN PATENT APPLICATION

(11) **EP 1 571 580 A2**
(43) Date of publication of application: **07.09.2005**
(21) Application number: 05251261.3
(22) Date of filing: 02.03.2005
(51) Int. Cl.: G06F 17/60

(54) **Information processing apparatus, information processing method, and computer program**

(30) Priority: 04.03.2004 JP 2004060781
(71) Applicant: SONY CORPORATION, Tokyo (JP)
(72) Inventor: Takabayashi, Kazuhiko, Sony Corporation, Shinagawa-ku, Tokyo (JP); Minoya, Yasushi, Sony Corporation, Shinagawa-ku, Tokyo (JP); Takahashi, Yukio, Sony Corporation, Shinagawa-ku, Tokyo (JP)
(74) Representative: Robinson, Nigel Alexander Julian

(57) **Abstract**

An information processing apparatus operating as a content use management server is disclosed. The apparatus includes a storage unit for storing a license as information for granting rights to use content and content attribute information, and a data processing unit for carrying out a content state shifting process in which to shift content usable states. The content usable states are formed by a bound state and a discrete state. The bound state refers to the state in which the content is allowed to be used by any of member clients on a local network of which the content use management server is a part. The discrete state refers to the state in which the content is allowed to be used only by a member client retaining the license for granting rights to use the content. The data processing unit updates descriptive information on the license and the content attribute information stored in the storage unit in order to shift the two content states.

## Description

The present invention relates to an information processing apparatus, an information processing method, and a computer program. More particularly, the invention relates to an information processing apparatus, an information processing method, and a computer program for alternating two states of content in a local network environment such as a home network for more reliable content use management under reinforced copyright protection, one of the two states of content referring to "bound" content set for use by member clients on the local network, the other state referring to "discrete" content made usable outside the local network.

With the Internet coming into general use today, various kinds of digital content such as computer files are distributed extensively over the network. The widespread acceptance of broadband communication networks (e.g., xDSL (x digital subscriber line), CATV (cable TV), wireless networks) is setting the stage for enabling digital data such as music data, picture data and electronic publications, as well as "rich" content such as moving pictures to be delivered to users in stress-free fashion.

The content being distributed is digital content which, by its nature, could be copied, tampered with or otherwise handled by unscrupulous parties in a fairly easy manner. In fact, illicit acts of copying or tampering of content are daily occurrences that constitute the major impediment to the buildup of earnings for digital content vendors. The vendors have been forced to raise the prices of their content offerings to compensate for the unrealized profits. The higher prices in turn discourage potential buyers from purchasing content, in what can only be termed a vicious circle.

In recent years, technologies such as computers and networks have found their way into vast numbers of households. At home, information equipment including PCs and PDAs (personal digital assistants) as well as various household appliances comprising TV sets and video reproducing apparatuses may be interconnected via a home network. Many such home networks are connected through routers to an external wide area network such as the Internet. The content acquired legitimately from servers on the Internet may be accumulated in the server of a home network (called the home server hereunder where appropriate) before being distributed over the local network to its terminals (i.e., clients) in the household.

Under the Copyright Law, content products as creators' works are protected against illicit copying, tampering, or other abuses without permission. On the other hand, legitimate users of content are allowed to make their copies for private, home, or similarly limited forms of use (as stipulated by Article 30 of the Copyright Law).

When the scope of private uses envisaged by the Copyright Law is applied to the home network, using content on any of the client terminals connected to the network may be interpreted as legally permitted private or home use. Once content is legitimately acquired by a home server, the content may be regarded as freely usable by client terminals on the home network of which the home server is a part. (Naturally, there ought to be certain restrictions on the number of terminals that can use content.)

The state of the art today, however, is not at the point where it is possible to distinguish whether a particular client terminal logging onto a home network applies to the category of private uses when handling content. Illustratively, any home network may be connected via a router to an external network on an IP protocol basis. That means the home server is incapable of knowing where exactly the currently accessing client is located. If the home server supplies content to the clients gaining access from external (i.e., remote) locations, there is virtually no limit to the use of the supplied content, with the copyright of the content left practically unprotected. This state of affairs could drive content creators to lose their motivation.

Where the home server grants any of its client terminals permission to use content on a given home network, the same client could log onto a plurality of home networks at suitable time intervals to use content in virtually unlimited fashion.

However, if client terminals are subject to inordinately stringent restrictions on the use of content, then users are unable to secure private uses of content permitted under the Copyright Law. Where content cannot be enjoyed as much as desired, users could be dissuaded from setting up home servers or utilizing content delivery services. This can constitute a barrier to the development of content distribution business.

Since users having lawfully purchased publications can use freely what they have obtained, there has been proposed a method for allowing a user to copy and use content over a network in a manner acceptable to content copyright holders (as disclosed illustratively in Japanese Patent Laid-open No. 2002-73861). The proposed method involves classifying users in terms of relative levels between the users and license holders of information so that the information may be delivered to the users in a different manner specific to each of the relative levels involved. The method, however, fails to determine the range of terminal locations on the network which may be tolerated for private use.

At present, UPnP (registered trademark) is known as a typical protocol for use in setting up a home network. UPnP enables the local network to be established without requiring users to carry out complicated operations. Between the devices networked under UPnP, content delivery services are implemented with no need for making difficult operations or settings. Not dependent on any specific operating system (OS), UPnP allows new devices to be added easily to the existing network.

Under UPnP, networked devices exchange definition files described in XML (extensible markup language) for mutual authentication. The major processes performed by a networked device under UPnP are outlined below.
(1) Addressing process: A device acquires its own device ID such as an IP address on the network.
(2) Discovery process: A device searches for the other devices on the network and acquires information such as device types and functions from the responses received from the devices.
(3) Service requesting process: A device requests a service from an appropriate device based on the information acquired in the discovery process.

Carrying out the processes above allows a given device on the network to offer or receive services from other networked devices. A newly networked device first acquires a device ID in the address process, acquires information about the other devices on the network, and requests services from suitable devices as per the acquired information.

The content stored in the home server can be accessed from other devices on the home network. For example, a device connected to a network under UPnP can acquire content from its home server. If content is video or audio data, the user of the connected device may enjoy the acquired content such as movies or music by additionally attaching a TV set or a player to the network.

Devices on the home network such as the home server retain private content, payable content, and other kinds of content requiring appropriate copyright management. This necessitates taking suitable measures against illicit access to the content over the network.

The user's device in possession of a suitable license is rightfully allowed to access the networked device holding the corresponding content. In a home network environment connected to an external network via a home router, however, an unlicensed user may surreptitiously connect to the home network from the outside.

Such illicit access is forestalled illustratively by getting the home server to retain a list of its clients allowed to access the server. Every time a client requests access to the home server, the home server checks the requesting client against the client list to see if the client has been authorized to access the server. Thus illicit accesses are prevented.

In connection with the above-mentioned technique for preventing illicit access, so-called MAC (media access control) address filtering has been known. This technique involves establishing a list of devices authorized for access using MAC addresses. A MAC address is a physical address assigned uniquely to each communication device. More specifically, the filtering technique requires that a router or a gateway isolating the internal network (sub-net) such as the home network from an external network be furnished with MAC addresses registered beforehand to permit access on the internal network. When a packet is received, its MAC address is checked against the registered MAC addresses for a match. Any attempt at access from a device with an unregistered--and thus unmatched--MAC address is rejected. This type of technology is disclosed illustratively in Japanese Patent Laid-open No. Hei 10-271154.

The above procedure that may be called member registration limits the uses of content to only the clients registered as members. The server gives a client permission to register as a member or to use content only if the client attempts to access on the same home network as the server; any device attempting access outside the home network such as from the Internet is barred from making member registration or utilizing content. In this manner, only the limited member clients are allowed to use content.

Where content utilization management is based on the member list, any client logging onto the same home network as the server is recognized as a member and thereby allowed to use content. Sometimes, however, the user of a client may wish to take content out of the local network for a different mode of utilization.

From the viewpoint of copyright management, letting content be used both on the local network and outside of it is unacceptable because of the duplicate nature of content use. What is desired here is for content to be used alternately between two states, i.e., on the local network and outside of it.

The present invention has been made in view of the above circumstances and provides an information processing apparatus, an information processing method, and a computer program for alternating two nonoverlapping states in which to use content either on or away from a local network such as a home network under management of a home server established as a content management server.

In carrying out the invention and according to a first aspect thereof, there is provided an information processing apparatus operating as a content use management server, including: a storage unit for storing a license as information for granting rights to use content, and content attribute information; and a data processing unit for carrying out a content state shifting process in which to shift content usable states. The content usable states are formed by a bound state and a discrete state. The bound state refers to the state in which the content is allowed to be used by any of member clients on a local network of which the content use management server is a part. The discrete state refers to the state in which the content is allowed to be used only by a member client retaining the license for granting rights to use the content. The data processing unit updates descriptive information on the license and the content attribute information stored in the storage unit in order to shift the two content states.

In one preferred structure of the information processing apparatus according to the first aspect of the invention, the data processing unit may update the content attribute information by establishing identification information on the content use management server as a local license administrator if the content is for use in the bound state, and by not establishing the identification information on the content use management server if the content is for use in the discrete state.

In another preferred structure of the information processing apparatus according to the first aspect of the invention, the data processing unit may update the descriptive information on the license by establishing information indicative of the license corresponding to the bound state if the content is for use in the bound state, and by not establishing the information indicative of the corresponding license if the content is for use in the discrete state.

In a further preferred structure of the information processing apparatus according to the first aspect of the invention, the data processing unit may output a license invalidation request to the member client retaining the license for granting rights to use the content in the bound sate in order to shift the content from the bound state to the discrete state.

In an even further preferred structure of the information processing apparatus according to the first aspect of the invention, upon receipt of a request to shift the content from the bound state to the discrete state from a member client which is on the same local network as the content use management server and which retains the license for the content about which the request is made, the data processing unit may update the descriptive information and the content attribute information on the original license held by the content use management server, notify the requesting client of the updated content attribute information, and move the updated license to the requesting client.

According to a second aspect of the invention, there is provided an information processing apparatus including: a storage unit for storing a license as information for granting rights to use content; and a data processing unit for moving the license to a device; wherein the data processing unit checks to determine whether the device to which to move the license belongs to a local network of which the information processing apparatus is a part, the data processing unit further moving the license to the device on condition that the device is found to be on the same local network as the information processing apparatus.

In one preferred structure of the information processing apparatus according to the second aspect of the invention, the data processing unit may check to determine, given a packet from a device requesting the movement of the license, whether the requesting device is on the same local network as the information processing apparatus on the basis of a media access control address in the packet indicative of where the packet was originated.

According to a third aspect of the invention, there is provided an information processing method for shifting usable states of content managed by a content use management server, the information processing method including the steps of: inputting a request to shift the content usable states; acquiring a license as information for granting rights to use the content and content attribute information from a storage unit; and updating descriptive information on the license and the content attribute information in order to shift the content usable states formed by a bound state and a discrete stat. The bound state refers to the state in which the content is allowed to be used by any of member clients on a local network of which the content use management server is a part. The discrete state refers to the state in which the content is allowed to be used only by a member client retaining the license for granting rights to use the content.

In one variation of the information processing method according to the third aspect of the invention, the information updating step may update the content attribute information by establishing identification information on the content use management server as a local license administrator if the content is for use in the bound state, and by not establishing the identification information on the content use management server if the content is for use in the discrete state.

In another variation of the information processing method according to the third aspect of the invention, the information updating step may update the descriptive information on the license by establishing information indicative of the license corresponding to the bound state if the content is for use in the bound state, and by not establishing the information if the content is for use in the discrete state.

In a further variation of the information processing method according to the third aspect of the invention, the method may further include the step of outputting a license invalidation request to the member client retaining the license for granting rights to use the content in the bound sate in order to shift the content from the bound state to the discrete state.

In an even further variation of the information processing method according to the third aspect of the invention, the method may further include the steps of, upon receipt of a request to shift the content from the bound state to the discrete state from a member client which is on the same local network as the content use management server and which retains the license for the content about which the request is made: updating the descriptive information and the content attribute information on the original license held by the content use management server; notifying the requesting client of the updated content attribute information; and moving the updated license to the requesting client.

According to a fourth aspect of the invention, there is provided an information processing method for use with an information processing apparatus, the information processing method including the steps of: receiving from a device a request to move thereto a license as information for granting rights to use content; checking to determine whether the requesting device to which to move the license belongs to a local network of which the information processing apparatus is a part; and moving the license to the requesting device on condition that the requesting device is found to be on the same local network as the information processing apparatus.

In one preferred variation of the information processing method according to the fourth aspect of the invention, the checking step may check to determine, given a packet from the device requesting the movement of the license, whether the requesting device is on the same local network as the information processing apparatus on the basis of a media access control address in the packet indicative of where the packet was originated.

According to a fifth aspect of the invention, there is provided a computer program for shifting usable states of content managed by a content use management server, the computer program including the steps of: inputting a request to shift the content usable states; acquiring a license as information for granting rights to use the content and content attribute information from a storage unit; and updating descriptive information on the license and the content attribute information in order to shift the content usable states formed by a bound state and a discrete state, the bound state referring to the state in which the content is allowed to be used by any of member clients on a local network of which the content use management server is a part, the discrete state referring to the state in which the content is allowed to be used only by a member client retaining the license for granting rights to use the content.

According to a sixth aspect of the invention, there is provided a computer program for use with an information processing apparatus in moving a license as information for granting rights to use content, the computer program including the steps of receiving from a device a request to move the license thereto; checking to determine whether the requesting device to which to move the license belongs to a local network of which the information processing apparatus is a part; and moving the license to the requesting device on condition that the requesting device is found to be on the same local network as the information processing apparatus.

The computer program of this invention, when offered to users, is retained on such recording media as CDs, floppy disks or magneto-optical disks or carried by communication media like networks, in a computer-readable manner for installation into a computer system capable of executing diverse program codes. The computer-readable program when installed causes the computer system to implement the processes intended by the program.

According to the invention, as outlined above, content to be used is shifted between the two usable states, i.e., bound state and discrete state. In the bound state, content can be used by any of the member clients on the local network. In the discrete state, content can be used outside the local network. The usage of content is alternated between the two states by updating content attribute information and descriptive information on the license relevant to the content of interest. The two states are not allowed to occur at the same time; the content to be used is always in either of the two usable states. Concurrent--and therefore illicit--uses of content in the two states are prohibited so that content utilization is kept under reliable copyright management.

In this specification, the term "system" refers to a logical configuration of a plurality of component devices. Each of the devices may or may not be contained in a single enclosure.

Embodiments of the invention will now be described, by way of example only, with reference to the accompanying drawings in which:
Fig. 1 is a schematic view showing a typical network configuration to which this invention can be applied;
Fig. 2 is an explanatory view indicating a typical structure of a networked device;
Fig. 3 is an explanatory view illustrating a typical structure of a home network;
Fig. 4 is a tabular view of a member client list owned by an information processing apparatus according to an example of the invention, such as a home server;
Fig. 5 is an explanatory view depicting a member registration processing sequence performed by a client;
Fig. 6 is an explanatory view showing how content is shifted from its discrete state to the bound state;
Fig. 7 is an explanatory view indicating how content is shifted from its bound state to the discrete state;
Fig. 8 is an explanatory view of a processing sequence in which content is shifted from the discrete state to the bound state;
Fig. 9 is another explanatory view of the processing sequence in which content is shifted from the discrete state to the bound state;
Figs. 10A and 10B are explanatory views showing structures of content attribute information and record data on a license regarding content in the discrete state and in the bound state;
Fig. 11 is an explanatory view of a processing sequence in which content is shifted from the bound state to the discrete state;
Fig. 12 is another explanatory view of the processing sequence in which content is shifted from the bound state to the discrete state;
Fig. 13 is an explanatory view of a sequence in which content in the discrete state is moved;
Figs. 14A and 14B are explanatory views showing how content is shifted from the bound state to the discrete state based on a request from a client; and
Fig. 15 is a block diagram illustrating a typical functional structure of a server.

Preferred embodiments of the information processing apparatus, information processing method, and computer program of this invention will now be described with reference to the accompanying drawings.

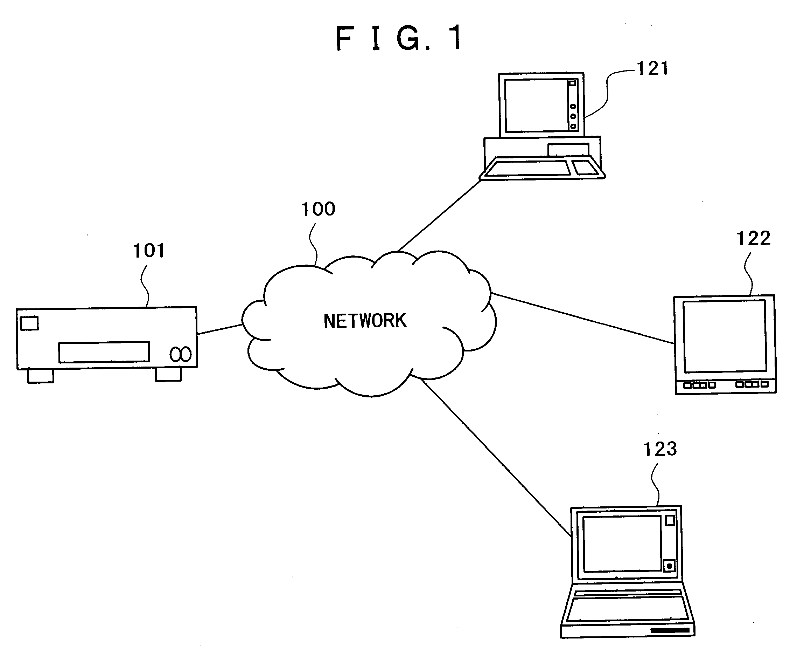

A typical network configuration to which the invention may be applied is explained below with reference to Fig. 1. Fig. 1 shows illustratively a home network constituted by a server 101 that handles various processing requests such as a request from a client to acquire content, and by a personal computer (PC) 121, a monitor 122, and a PC 123 acting as clients making the processing requests to the server 101. The component devices are connected illustratively via a network 100. More electronic and home appliances of diverse kinds may be connected to the network as additional clients.

What the server 101 does in response to requests from the clients includes the service of offering content from a storage unit such as a hard disk drive held by the server 101, and the service of processing data by carrying out application programs that are installed in and executed by the server 101. Although Fig. 1 shows the server 101 distinct from its client devices, this is not limitative of the invention. A server signifies equipment that offers services in response to requests from its clients. It follows that any of the client devices may in turn act as a server when offering its data processing services to other clients. Each of the networked client devices in Fig. 1 may thus operate as a server.

The network 100 is a wired or wireless network that allows the networked devices to exchange communication packets such as Ethernet (registered trademark) frames. Each of the clients may request the server 101 to process data by placing a processing request in a data part of an Ethernet frame and sending the request-packed frame to the server 101. Upon receipt of the processing request frame, the server 101 carries out relevant data processing and, as needed, places data resulting from the processing into a data part of a communication packet and transmits the data-carrying packet to the requesting client.

The devices to be connected to the network are illustratively made up of UPnP-compatible devices. This network configuration makes it easy to add or remove devices to or from the network. Each new device to be added to the network carries out the following three processes:
(1) addressing process, in which to acquire its own device ID such as an IP address;
(2) discovery process, in which to search for the other devices on the network, receive responses from the discovered devices, and acquire information such as device types and functions from the received responses; and
(3) service request process, in which to request a service from an appropriate device based on the information acquired in the discovery process.

Performing the above three processes allows the newly networked device to receive services from other devices on the network.

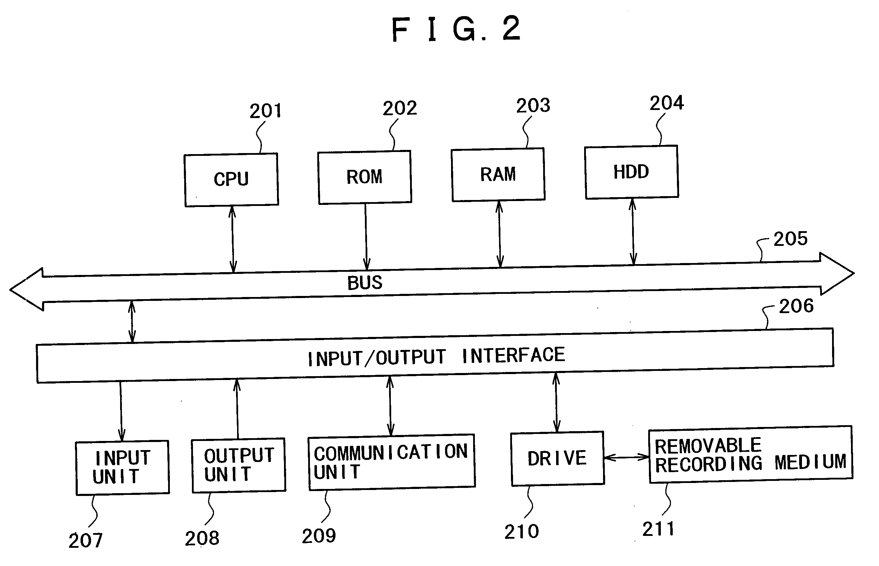

Described below with reference to Fig. 2 is a hardware structure of a PC as a typical information processing apparatus acting both as a server and as a client device as shown in Fig. 1.

A CPU (central processing unit) 201 carries out various processes in keeping with programs held in a ROM (read only memory) 202 or on an HDD (hard disk drive) 204. In performing its processing, the CPU 201 functions as a data processing unit or a communication control processing unit. A RAM (random access memory) 203 accommodates as needed the programs or data being carried out or operated on by the CPU 201. The CPU 201, ROM 202, RAM 203, and HDD 204 are interconnected via a bus 205.

An input/output interface 206 is connected to the bus 205. An input unit 207 and an output unit 208 are connected to the input/output interface 206. The input unit 207 is illustratively made up of a keyboard, switches, buttons, and a mouse. The output unit 208 is constituted by an LCD or a CRT presenting the user with various items of information, as well as by speakers. Also connected to the input/output interface 206 are a communication unit 209 and a drive 210. The communication unit 209 functions as a data transmitting/receiving unit. The drive 210 may have a removable recording medium 211 such as a magnetic disk, an optical disk, a magneto-optical disk, or a semiconductor memory loaded inside. The drive 210 writes and reads data to and from the loaded removable recording medium 211.

The structure shown in Fig. 2 is that of a personal computer (PC) acting as a server, one of the networked devices included in Fig. 1. However, the networked devices are not limited to PCs. As illustrated in Fig. 1, the devices on the network may include portable communication terminals such as cellular phones and PDAs as well as diverse electronic devices or information processing apparatuses including players and displays. The devices and apparatuses may have their own unique hardware structure and carry out their processing in keeping with their particular hardware requirements.

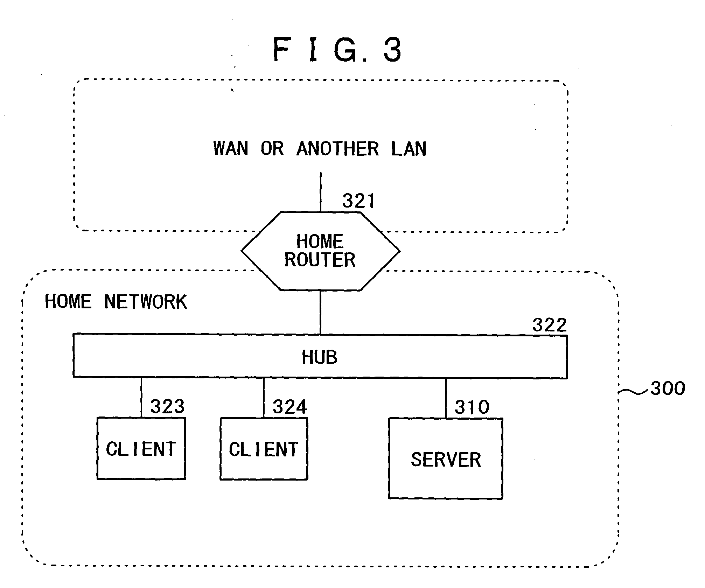

Fig. 3 is an explanatory view illustrating a typical structure of a home network 300 according to this invention. The home network 300 set up in the household is connected via a home router 321 to a WAN (wide area network) such as the Internet or to another LAN (local area network). The home router 321 is established as the default gateway of the home network 300.

Illustratively, the home network 300 is formed by connecting to a hub 322 LAN cables from host devices such as a home server 310 and client terminals 323, 324, etc.

The host devices on the home network 300 such as the home server 310, client terminals 323, 324, etc., and home router 321, as well as host devices on an external network posses what is known as a MAC (media access control) address each. The MAC address is unique to each device. Over the network, the host devices send and receive packets such as Ethernet (registered trademark) frames each containing header information including a destination MAC address and a source MAC address.

The host devices on the home network 300 such as the home server 310 and client terminals 323, 324, etc., are illustratively structured as an UPnP-compatible device each. Under the UPnP protocol, it is easy to add or remove devices to and from the network. Each device to be connected anew to the home network 300 need only complete the above-mentioned three processes, i.e., (1) addressing process, (2) discovery process, and (3) service requesting process. Thereafter the networked device can receives services on the home network 300 such as uses of content.

The home network 300 forms a local environment which is regarded as the domain of private or home uses of content. The home server 310 acquires content lawfully from content servers on an external network via the home router 321, accumulates the acquired content, and delivers it inside the household. The client terminals 323, 324, etc., are each allowed to request and acquire desired content from the home server 310 and to use the content thus obtained.

In the local environment, the client terminals 323, 324, etc., may acquire content from the home server 310 and, after locally copying it or using it on a streaming basis or otherwise, may take the content out of the local environment (i.e., to a remote environment) for other forms of use.

On receiving from a client a request to acquire content managed by the home server 310 or a request for member registration, the home server 310 verifies the locality of the requesting client. That is, the home server 310 checks to determine whether the requesting client belongs to the same home network as the server 310. Only if the client is found to be on the same home network does the home server 310 address the client's request. If the requesting client is found attempting to access the home server 310 from outside the local network via the home router 321, the request is rejected.

The locality verification process by the home server 310 takes place as follows: before starting content delivery services, the home server 310 acquires a MAC address of the default gateway from the home router 321. The MAC address of the home router 321 represents the MAC address of the default gateway.

When accessed by a client for a request, the home server 310 acquires a source MAC address from the request packet coming from the client, and compares the acquired source MAC address with the previously acquired MAC address of the default gateway. If the accessing client is on the same network, the received packet contains the MAC address of the client as the source MAC address; if the client is attempting to access from outside the home network via the router, then the source MAC address in the received packet is replaced by the MAC address of the router (i.e., default gateway). It follows that if the source MAC address in the received packet matches the MAC address of the router (default gateway), then the accessing client is deemed to be outside the home network; in the case of a mismatch between the two MAC addresses, the client is deemed located on the home network.

In this manner, the home server 310 can readily determine whether the requesting client is on the same home network, i.e., in the local environment. If the accessing client is found in the local environment, the home server 310 delivers the requested content to the client together with a license including expiration date information. If the client is not found in the local environment, the request is denied. When content is exchanged only between the devices in the local environment, illicit distribution of content is effectively forestalled.

The locality verification process by the home server 310 may be carried out otherwise. For example, secret information to be shared by the devices on the home network may be established beforehand, and the shared secret information may be placed in packets that are exchanged over the home network. Upon receipt of a packet, the server checks the secret information in the received packet against the secret information in its possession. In the case of a match, the server determines that the packet is coming from a device on the home network. Typical secret information may be the MAC address of the home router 321, secret information stored in a local environment management unit installed on the home network, or the MAC address of such a local environment management unit.

More specifically, the clients 323, 324, etc., accessing the home server 310 may each acquire from the home router 321 the MAC address of the default gateway as the shared secret information on the home network, place the acquired MAC address in a packet before sending the packet as an access request to the server 310. The server 310 checks to determine whether the shared secret information, i.e., MAC address of the default gateway, placed in the packet matches the secret information in its possession. In the case of a match, the server 310 determines that the packet is sent from a client on the same home network as the server 310.

The home server 310 carries out membership management for its clients. More specifically, the home server 310 bases its membership management on a member client list in its possession, i.e., a list of networked devices authorized to acquire content. The member client list contains information including identifiers of the networked devices (clients) having access rights.

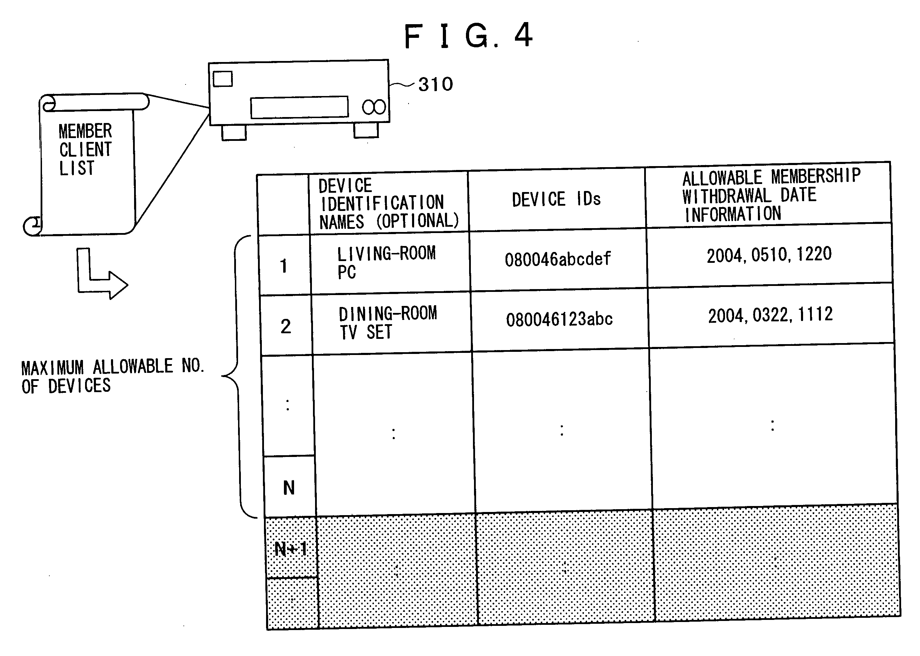

Fig. 4 shows a typical member client list held by the home server 310. As illustrated in Fig. 4, the list contains device identification names, device IDs, and allowable membership withdrawal time information regarding the clients (i.e., devices). The device identification names are optional, referring to user-defined easy-to-understand names such as a living-room PC and a dining-room TV set.

The device ID is an identifier unique to each client. Illustratively, a MAC address set for each client is utilized as its device ID. When a client registers as a member, the server acquires and retains the MAC address of that client. The process of member registration will be discussed later in detail.

Allowable membership withdrawal date information refers to the latest date until which the content offered to the client remains effective. When the server provides (i.e., outputs) content to a member client, the client stores the offered content into its internal storage unit such as a hard disk drive or a flash memory together with a license designating content use conditions such as expiration date information.

As long as a client is a member, that client can use content until the expiration date of the content is reached. After the expiration, the client may again log on to the server to update the expiration date or acquire the content again. However, if a client in possession of content with its expiration date yet to be reached withdraws from membership, the nonmember client is barred from using content. The reason is that if the client ceases to be a member of a particular local network (e.g., home network), the nonmember client might then proceed with using content in ways exceeding "the scope within which content is allowed to be copied for private, home or similarly limited forms of use" as stipulated by Article 30 of the Copyright Law.

In order to prevent such abuses of content, the home server 310 upon receipt of a membership withdrawal request from a client checks the member client list to determine whether the content offered to the requesting client has yet to reach its expiration date. If the client is in possession of the content with its expiration date yet to be reached, the client is either barred from withdrawing from membership or required to return the content.

Every time a client requests withdrawal from membership, the home server 310 verifies that the licenses for all content items in possession of the requesting client have expired. Only after the expiration of all content licenses, the requesting client is allowed to withdraw from membership.

As shown in Fig. 4, there is established beforehand a maximum allowable number N of member clients (e.g., N = 5, 10, 15, 63, etc.). As long as the number of registered member clients falls short of the number N, a new client or clients can be added to the network.

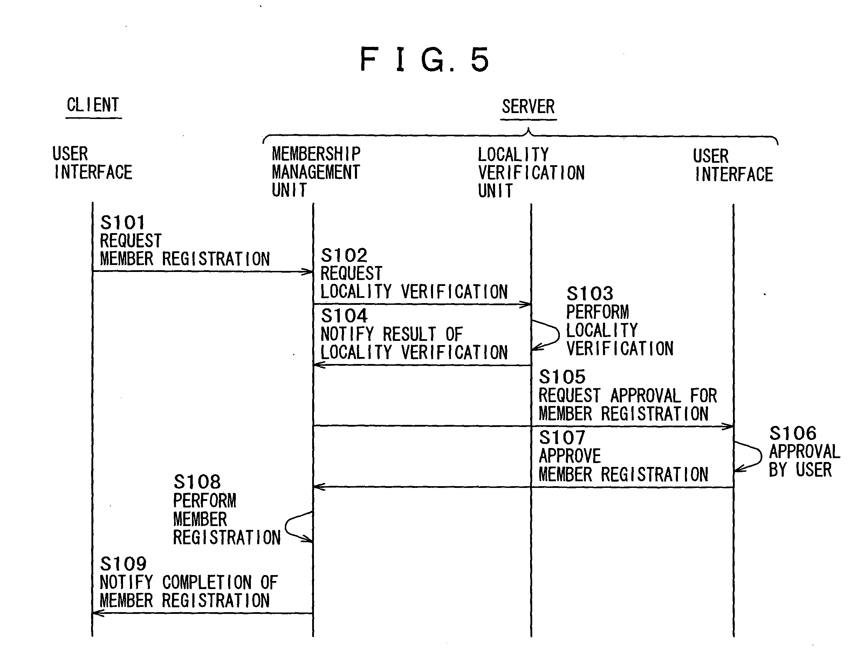

The process of member client registration will now be described. Fig. 5 shows a member registration processing sequence performed by a client. Indicated specifically in Fig. 5, from left to right, are steps performed in sequence by a client that requests member registration and by a membership management unit, a locality verification unit, and a user interface of the server that handles the request from the client.

The user first inputs a request to execute member registration through a user interface. In step S101, the client sends a member registration request to the server. The request is transmitted to the server in the form of a packet containing an identifier (ID) of the client. The client identifier may illustratively be the MAC address of the client.

In step S102, the membership management unit of the server requests the locality verification unit to perform locality verification on the client. In step S103, the locality verification unit verifies the locality of the client and notifies the membership management unit of the result of the verification.

The locality verification process is carried out by the locality verification unit in the same manner as the locality verification process executed in response to the above-mentioned content request from the client.

In step S103, the locality verification unit extracts a source MAC address from the request packet coming from the client, and checks the extracted address against the MAC address of the default gateway acquired previously by the server. If the accessing client is found located on the same network, the source MAC address in the request coincides with the MAC address of the client. If the client is attempting to access from outside the local network through the router, then the source MAC address is found replaced by the MAC address of the router. In this manner, a check is made to determine whether the source MAC address matches the MAC address of the default gateway. The result of the check indicates whether the requesting client is located on the same home network as the server, i.e., in the local environment. Alternatively, locality verification is carried out by determining whether shared secret information is included in the request packet.

In step S104, the locality verification unit notifies the membership management unit of the result of the locality verification in step S 103. If the requesting client is found outside the same home network as the server, i.e., somewhere outside the local environment, then the process is terminated without the client's member registration being completed. In this case, the membership management unit may send a "registration denied" message to the client.

If in the locality verification process the requesting client is found located on the same home network as the server, i.e., in the local environment, then step S105 is reached. In step S105, the membership management unit outputs a member registration approval request to the user interface. More specifically, the display of the server presents a user input request screen prompting the user to determine whether or not to approve member registration.

In step S106, the user makes an entry approving member registration. In step S 107, the input information is forwarded from the user interface to the membership management unit. If in step S106 the user does not make the approval entry, the process is terminated without the client's member registration being completed. In this case, the membership management unit may send a "registration denied" message to the client.

In step S107, the membership management unit verifies the approval of member registration. In step S108, the membership management unit registers the client as a member. Specifically, the membership management unit adds an entry with information on the client established therein to the member client list explained above with reference to Fig. 4. Because the member client list is subject to the maximum allowable number of member clients as described above, the requesting client is added to the list only if the entry count in the list has yet to reach the maximum allowable number. If the number of entries in the list has reached the maximum allowable number, the requesting client is not registered.

When the member registration process is completed in step S108, step S109 is reached. In step S 109, the membership management unit notifies the client of the completion of member registration, and terminates the process.

As described, the server carries out member registration of a requesting client on two conditions:
(1) the client is found located on the same home network as the server (i.e., the locality of the client is ascertained); and
(2) the user has given explicit approval of the registration.

Meeting these conditions amounts to a strict membership management registration scheme that makes it possible to forestall a member registration request from an externally located client (i.e., not on the same home network as the server) as well as to prevent member registration without the user's explicit approval. As a result, only the clients located on the same home network as the server are authorized to use content; illicit uses of content are effectively excluded thereby.

When such content utilization management based on the membership list is in place, the clients located on the same home network as the server become members authorized to use content. Sometimes, however, the user may wish to take content out of the local network for a different form of utilization.

It is not acceptable, in view of the principles of copyright management, to let content be used both on the local network and outside of it in duplicate fashion. This invention proposes structures by which to prevent the overlapping use of content on and off the local network and to shift from one of the two modes of content usage to the other as needed.

The content that is placed in a state allowed for use by member clients on the local network is called bound content. In many cases, bound content is stored by a management server (e.g., home server) on a local network and used freely by member clients on the same network with licenses corresponding to the content suitably managed. Bound content is barred from uses outside the local network, e.g., not allowed to be brought out of the local network on a recording medium for use by an externally located device.

The content placed in a state ready for use only by a properly licensed device located outside the local network is called discrete content. Discrete content is stored illustratively on a recording medium that is brought out of the local network of the management server for use by an external device. Only the device holding the license corresponding to the discrete content of interest can use that content; the content is not allowed to be used concurrently by any member client on the local network. The license-holding device is illustratively a device loaded with the recording medium having both the content of interest along with its license recorded integrally thereon.

The server that manages content utilization sets each item of content for one of the above-described two states, bound state or discrete state. It is possible to shift content from the bound state to the discrete state and vice versa. Such state-to-state transition, called state shift, is controlled by the content use management server.

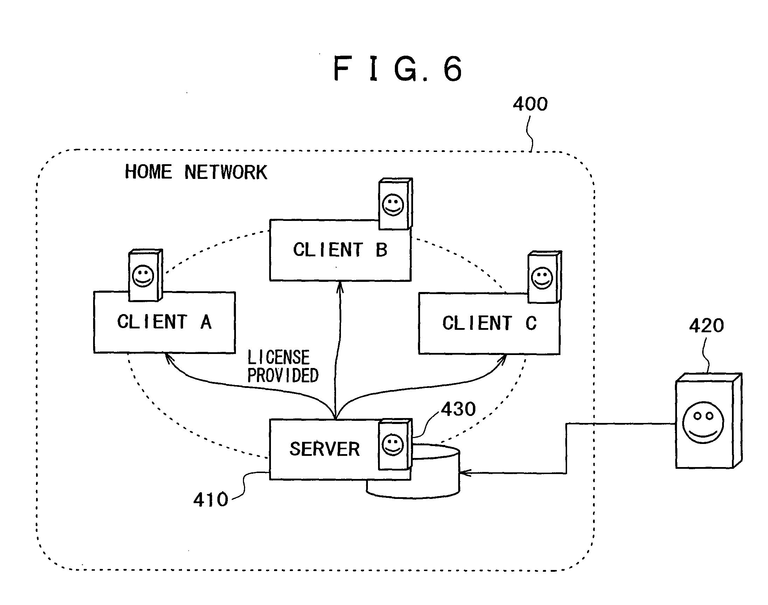

Fig. 6 is an explanatory view showing how content is shifted from the discrete state to the bound state. A content management server 410 located on a home network 400 carries out the above-described membership management for control over content uses.

Suppose that the user wants to turn discrete content 420, barred from use by member clients, into bound content 430 for use by member clients. In that case, the server 410 carries out a sequence of steps, to be discussed later, to execute a state shift from the discrete content 420 to the bound content 430. The bound content 430 resulting from the state shift is authorized for use by member clients within the scope of the license corresponding to the content 430 in question.

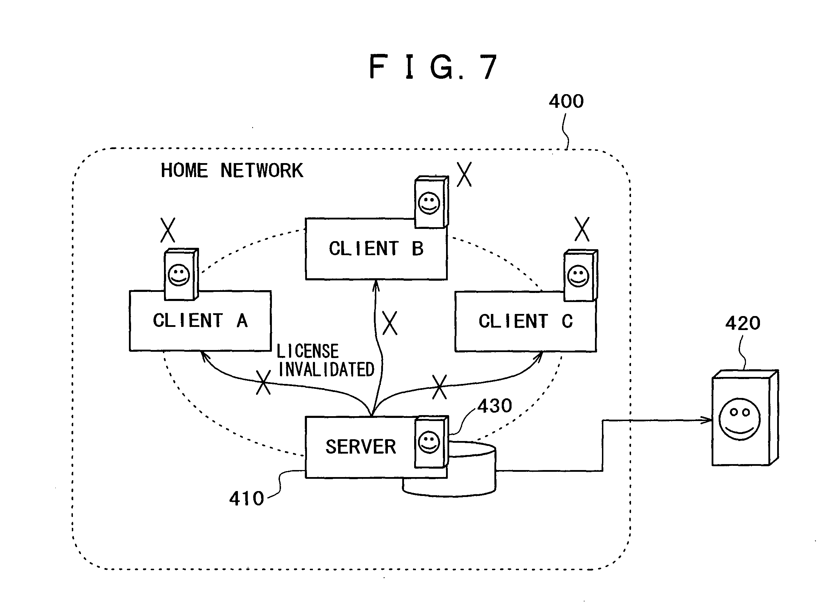

Fig. 7 is an explanatory view indicating how content is shifted from the bound state to the discrete state. The content management server 410 on the home network 400 holds the bound content 430 allowed for use by member clients. If the user wants to take the bound content 430 out of the local network for use by an external device, the server 410 carries out another sequence of steps, to be discussed later, to execute a state shift from the bound content 430 to the discrete content 420.

That process of state shift involves invalidation of the license for the content in question, i.e., halting the state of content usability by member clients. The process renders the discrete content 420 unusable by the multiple devices on the home network 400, turning the content into a state usable only by a license-holding device.

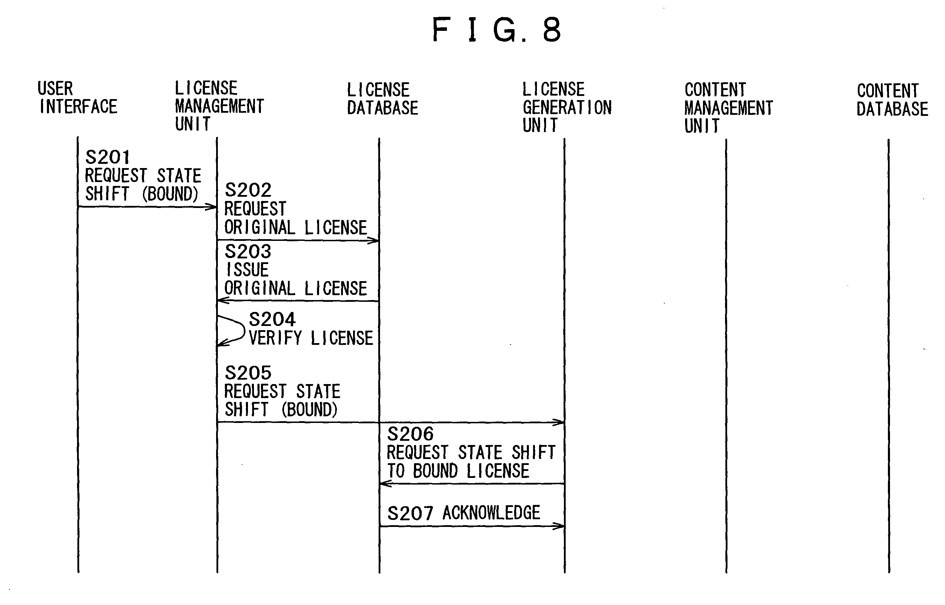

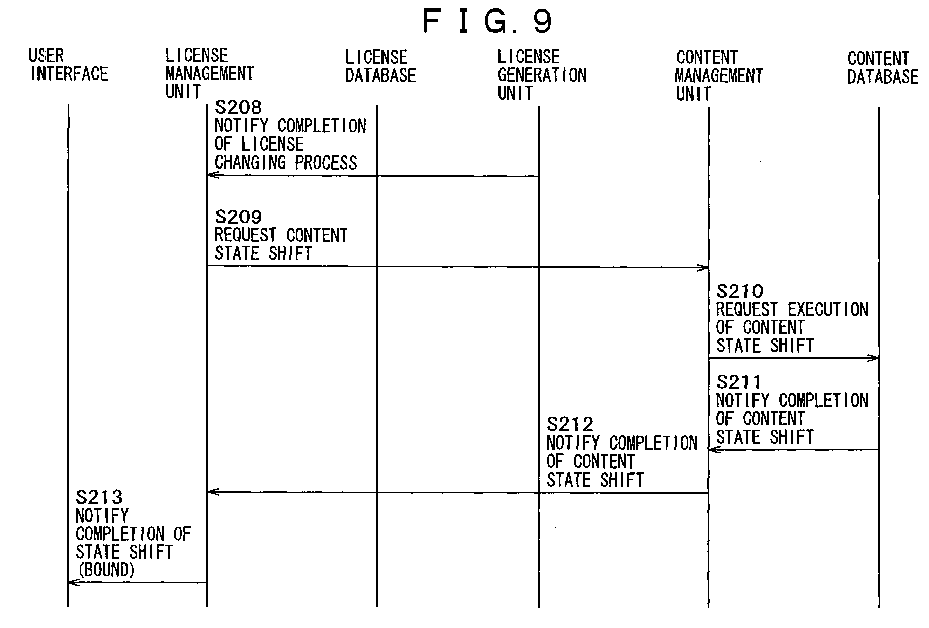

The sequences in which the state shifting process is carried out will now be described. Explained first with reference to Figs. 8 and 9 is a state shift sequence in which content is shifted from the discrete state to the bound state.

The steps outlined in Figs. 8 and 9 are performed by the server that manages content on the local network such as a home network. The steps in Figs. 8 and 9 are shown sequenced from left to right for execution by a user interface, a license management unit, a license database, a license generation unit, a content management unit, and a content database which make up the server.

In step S201, the user enters through the user interface a request to shift states of content, from the discrete state to the bound state in this example. At this point, a particular content item in the discrete state is designated, and the state shift request is made with regard to the designated content.

With the content thus designated, the license management unit reaches step S202. In step S202, the license management unit outputs to the license database an original license acquisition request to acquire the original license corresponding to the content designated for the discrete state.

In step S203, the license database outputs the license corresponding to the designated content. In step S204, the license management unit verifies the output license. Using electronic signature data or a hash value placed in the output license as a tamper check value, the license management unit verifies the validity of the license.

With the license found valid, the license management unit in step S205 requests the license generation unit for state shift to a bound license. In response to the request, the license generation unit in step S206 requests the license database for state shift to the bound license. In step S207, the license database carries out state shift as requested, and outputs a process complete acknowledgement to the license generation unit.

In step S208 of Fig. 9, the license generation unit notifies the license management unit of the completion of the license changing process. Given the notification that the license changing process is completed, the license management unit in step S209 outputs a content state shift request to the content management unit.

Given the content state shift request, the content management unit in step S210 requests the content database to execute content state shift. In step S211, the content management unit receives from the content database the notification that the content state shift is completed. In step S212, the content management unit notifies the license management unit that the content state shift is completed.

Given the notification that the content state shift is completed from the content management unit, the license management unit in step S213 outputs a message to the user interface saying that the state shift has now been complete.

After the processing above, the content in question is shifted from the discrete state to the bound state. The resulting bound content is thereafter allowed to be used by member clients on the local network.

As described above, the sequence in which to shift states between the bound content and the discrete content involves execution of two processes: license state shift and content state shift.

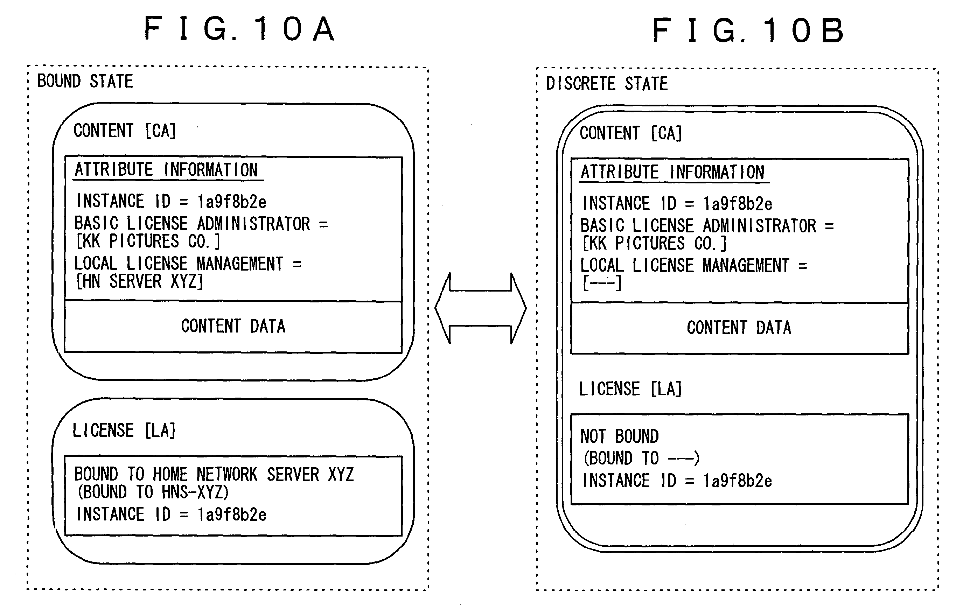

Specific examples of license state shift and content state shift will now be described with reference to Figs. 10A and 10B. Fig. 10A shows bound-state content along with a license corresponding to the content, and Fig. 10B indicates discrete-state content and a license corresponding to that content. These figures schematically depict the content examples and typical data constituting their corresponding licenses.

The content in the discrete state, as shown in Fig. 10B, is integrated with the corresponding license. This happens illustratively when discrete content is stored on a recording medium together with the integrally furnished license before being taken out of the local network.

The content in the bound state, as indicated in Fig. 10A, need not be integral with the corresponding license as in the case of discrete content. Instead, attribute information about the bound content includes local license management information such as "local license management information = [HN (home network) server XYZ]," recorded as illustrated to designate identification information about the license management server on the local network. When a local server name is found written in the local license management information constituting part of the attribute information about content, that content is presented as usable under management of the local server holding the corresponding license.

Furthermore, the license in the bound state includes recorded bound information constituted by an identifier of the local server that manages the corresponding content as well as by information indicating the bound state, such as [Bound to home network server XYZ (Bound to HNS-XYZ)] shown in Fig. 10A.

On the other hand, attribute information about the discrete content includes local license management information such as "local license management = [---]," established as shown in Fig. 10B. The identification information about the license management server on the local network is left blank, indicating that the content in question is not locally managed. The license corresponding to the discrete content includes recorded information saying that the content is not bound.

As described, the bound content and the discrete content differ in their content attribute information and in their license information. At the time of a state shift, the content attribute information and the license information are updated.

In the above-described sequence in Figs. 8 and 9, the license information is updated in steps S206 and S207 under control of the license generation unit, and the content attribute information is updated in steps S210 and S211 under control of the content management unit. Since the steps in Figs. 8 and 9 constitute a shift from the discrete state to the bound state, the processing involves changing the record information settings in Fig. 10B into the settings shown in Fig. 10A.

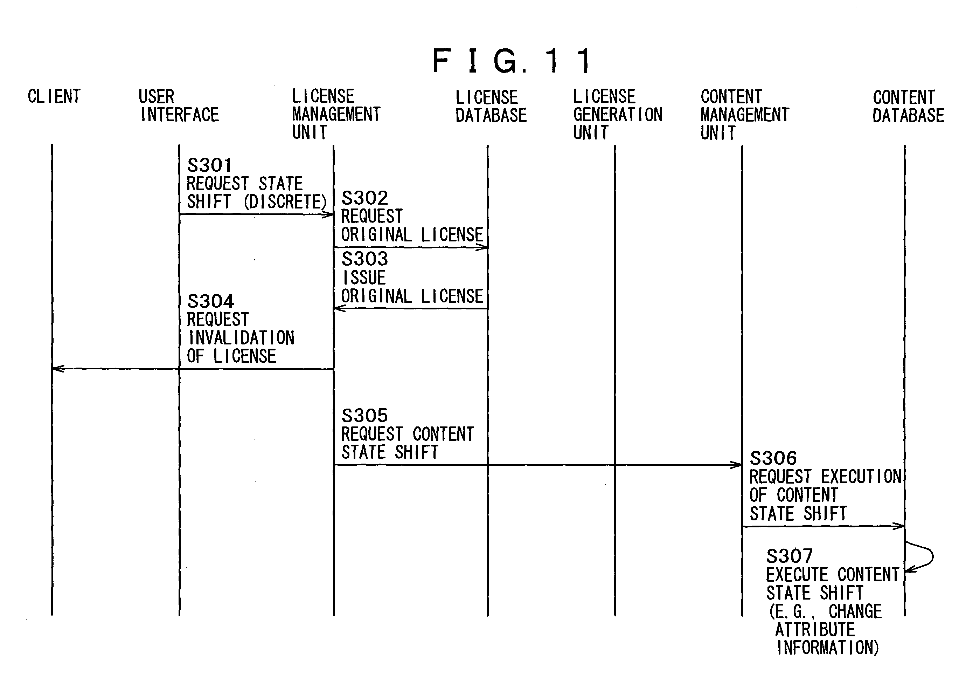

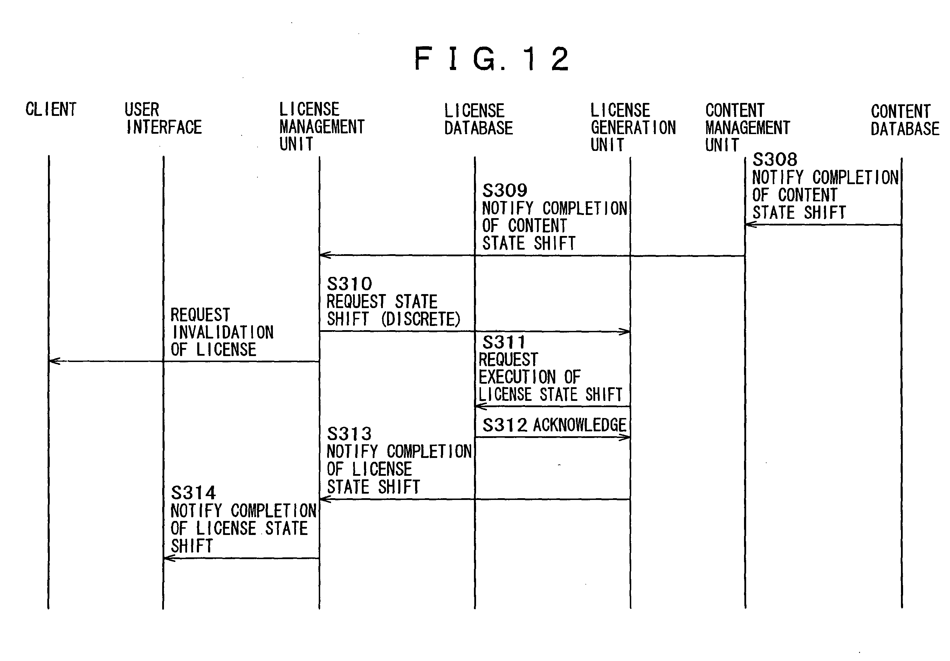

Described below with reference to Figs. 11 and 12 is a state shift sequence in which content is shifted from the bound state to the discrete state. The content in the bound state is allowed for use by member clients on the local network. A shift to the discrete state requires invalidating the license of the client requesting the shift.

The steps in Figs. 11 and 12 are shown sequenced from left to right for execution by a client located on the local network such as a home network and authorized to use bound content, as well as by the user interface, license management unit, license database, license generation unit, content management unit, and content database which make up the server that manages content on the local network.

In step S301, the user enters through the user interface a request to shift states of content, from the bound state to the discrete state in this example. At this point, a particular content item in the bound state is designated, and the state shift request is made with regard to the designated content.

With the content thus designated, the license management unit reaches step S302. In step S302, the license management unit outputs to the license database an original license acquisition request to acquire the original license corresponding to the content designated for the bound state.

In step S303, the license database outputs the license corresponding to the designated content. Upon receipt of the issued license, the license management unit outputs a license invalidation request to the requesting client on the local network. If there are a plurality of requesting clients, they are each given the license invalidation request. It might happen that the client or clients are not placed in a state of communication with the server at this point. In such a case, the license invalidation process is performed as soon as the client gains access to the server. Step S305 and subsequent steps are then carried out.

In step S305, the license management unit outputs a content state shift request to the content management unit. Given the shift request, the content management unit in step S306 requests the content database to execute a content state shift. In step S307, the content database carries out the process of content state shift.

The content state shift is performed by changing the attribute information on the content in question, as discussed above with reference to Figs. 10A and 10B. Since this is an example of shifting from the bound state to the discrete state, the recorded attribute data settings in Fig. 10A are changed into the settings shown in Fig. 10B.

After the attribute information is thus updated, the content database sends a processing complete notice to the content management unit in step S308 of Fig. 12. In step S309, the content management unit notifies the license management unit that the content state shift is completed.

On receiving from the content management unit the notification that the content state shift is completed, the license management unit in step S310 requests the license generation unit to perform discrete license state shift. In response to the request, the license generation unit in step S311 requests the license database to execute the shift to the discrete license state. On receiving the request, the license database in step S312 carries out the state shift and outputs a process completion acknowledgement to the license generation unit.

The license state shift above is carried out by changing the record data in Fig. 10A about the license corresponding to the bound content, into the record data in Fig. 10B about the discrete content.

In step S313, the license generation unit notifies the license management unit that the license changing process is completed. Given the notification that the license changing process is completed, the license management unit in step S314 outputs a message to the user interface saying that the state shift has now been completed.

The foregoing steps when carried out as described shift the content of interest from the bound state to the discrete state. The resulting content in the discrete state may be recorded on a portable medium that may be carried out of the local network for use by an externally located device.

As described above, the content shifted from the bound state to the discrete state is not allowed to be used by clients on the local network. If there is any client that has yet to complete its license invalidation process because of the inability to access the server client during the processing sequence, the server sends a license invalidation request to that client as soon as the client has gained access to the server. The client then invalidates the license in its possession as requested.

When bound content is changed into discrete content as described, the discrete content can be used by a device outside the local network but is barred from use by the clients on the local network.

Illustratively, the content placed in the discrete state in accordance with the above-described sequence is allowed to be moved between devices. The discrete content is basically the type of content authorized for use in accordance with its integrally furnished license. Typically, the discrete content is set for use when loaded into a single reproducing apparatus on a data recording medium holding the content in question.

The discrete content may be moved from one device to another on condition that it is furnished integrally with the corresponding license. In other words, the discrete content may not be used concurrently on a plurality of devices but may be moved from device to another for use.

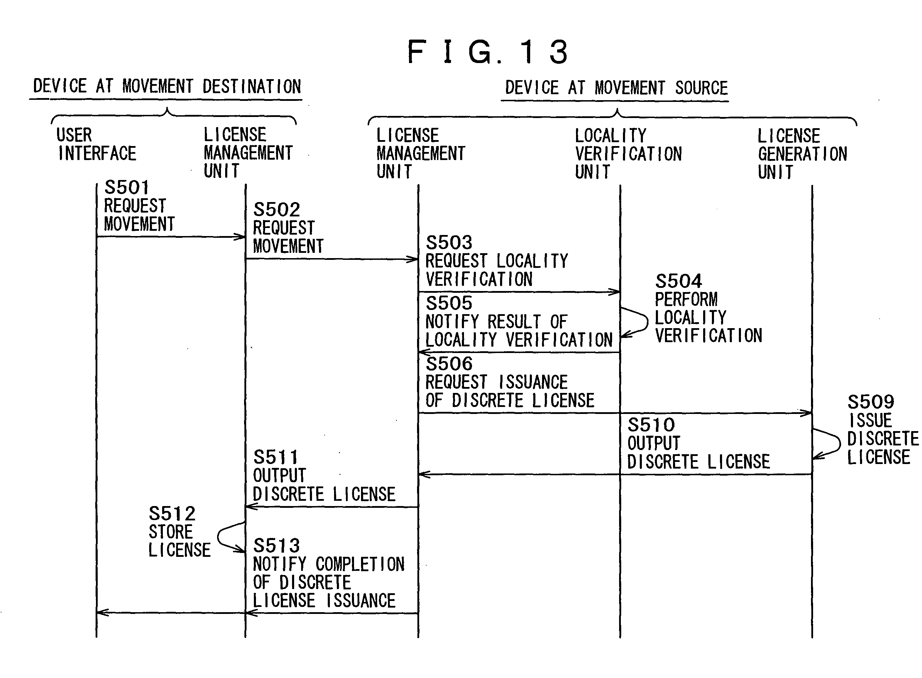

Described below with reference to Fig. 13 is a sequence in which discrete content is moved between devices. The steps in Fig. 13 are shown sequenced from left to right for execution by the user interface and license management unit of a destination device to which to move discrete content, and by the license management unit, locality verification unit, and license generation unit of a source device from which to move the discrete content.

In step S501, the user enters a request to move the discrete content of interest through the user interface of the device at the movement destination. In step S502, the device at the movement destination outputs a discrete content movement request to the device at the movement source. This request includes an identifier identifying the content of which the movement is being requested.

In step S503, the license management unit of the device at the movement source requests the locality verification unit to carry out a locality verification process on the device at the movement destination. In step S504, the locality verification unit verifies the locality of the destination device, and notifies the license management unit of the result of the verification.

The locality verification process by the locality verification unit is carried out in the same manner as the above-described locality verification process performed in response to the content request from the client.

More specifically, the locality verification unit in step S504 extracts a source MAC address from a movement request packet coming from the device at the movement destination, and compares the extracted source MAC address with the MAC address of the default gateway acquired previously by the server, i.e., the device at the movement source. If the requesting device is located on the same network as the server, the source MAC address in the request packet coincides with the MAC address of the source device. If the destination device is attempting to access from outside the local network through the router, then the source MAC address is found replaced by the MAC address of the router. In this manner, a check is made to determine whether the source MAC address matches the MAC address of the default gateway. The result of the check indicates whether the requesting destination device is located on the same home network as the server, i.e., in the local environment. Alternatively, locality verification is carried out by determining whether shared secret information is included in the request packet.

In step S505, the locality verification unit notifies the license management unit of the result of the locality verification carried out in step S504. If the destination device is found outside the same home network as the server, then the process is terminated without the discrete content of interest being moved. In this case, the locality verification unit may send a "movement denied" message to the requesting destination device.

If in the locality verification process the requesting destination device is found located on the same home network as the server, i.e., in the local environment, then step S506 is reached. In step S506, the license management unit outputs a discrete license issuance request to the license generation unit. In step S509, the license generation unit issues a discrete license. In step S510, the license generation unit outputs the generated license to the license management unit.

In step S511, the license management unit outputs the generated license to the license management unit of the device at the movement destination. In step S512, the license management unit of the destination device stores the license. During the storing process, the license is integrated into the corresponding content so as to bring about the discrete content state discussed above with reference to Fig. 10B. The content of interest can be acquired in encrypted form over the network or by way of a recording medium. In step S513, the movement source device notifies the movement destination device that the moving process is completed. This is how discrete content is moved from one device to another, i.e., how the license for the content of interest is moved between devices.

Although the state shift from bound content to discrete content was described above as a process performed by the server alone as depicted in Figs. 11 and 12, this is not limitative of the invention. Alternatively, a member client on the home network may request the server to shift the content of interest from the bound state to the discrete state in order to acquire the content in the discrete state.

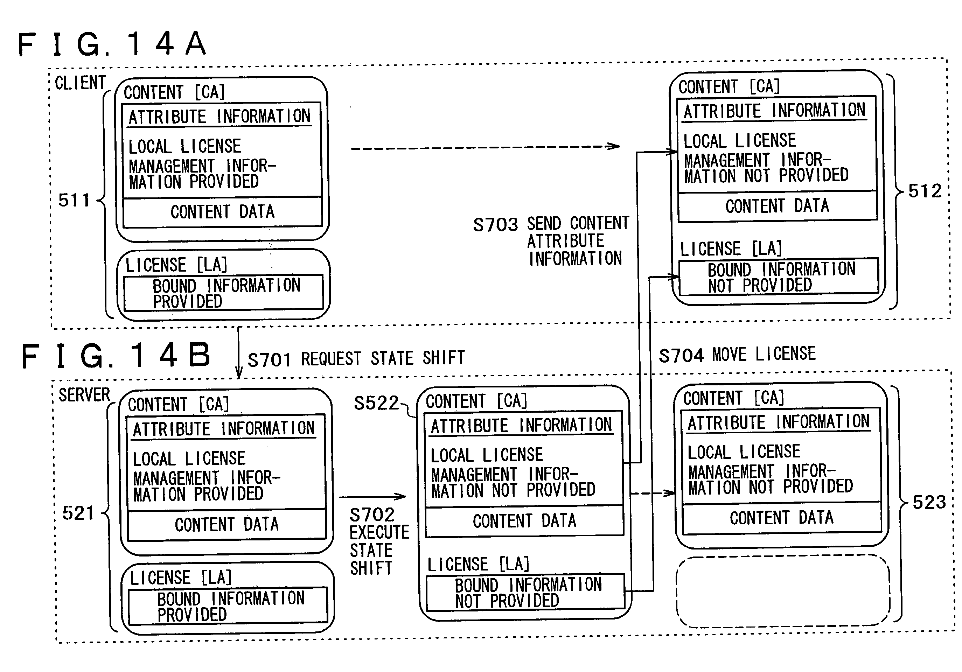

The alternative processing sequence above is described below with reference to Figs. 14A and 14B. Fig. 14A shows the transition of content and of the corresponding license on the side of a client, and Fig. 14B illustrates the transition of content and of the corresponding license on the server side.

The server holds original data 521 made up of bound content and the corresponding license. The client retains copy data 511 derived from the original content and license data 521. Attribute information on the content in the bound state includes local license management information, and the license has bound information attached thereto. That is, the original data is in the data record structure shown in Fig. 10A, i.e., in the bound state under management by the local server.

In step S701, the client outputs a state shift request to the server. Illustratively, the client requests a state shift to discrete content by transmitting to the server a packet containing a content identifier recorded in the copy data 511 retained by the client.

On receiving the state shift request from the client, the server creates discrete content and license data 522 by carrying out the state shifting process on the original license in accordance with the sequence discussed above with reference to Figs. 11 and 12. The discrete content and license data 522 thus created is the same as that which is shown in Fig. 10B. The attribute information on the content has no local license management information included therein, and bound information is removed from the license. That is, the discrete content and license data 522 is in the data record structure shown in Fig. 10B for use by an externally located device.

In step S703, the server sends to the client the attribute information on the content held in the discrete content and license data 522. In step S704, the server moves the license to the client.

After the foregoing steps, the client receives the license along with the content attribute information included in the discrete content and license data 522. The client then generates discrete content and license data 512 internally from what has been received.

The client can make use of the content in the discrete state off the network. The content in question is now unusable by the other clients on the same home network. The client retaining the discrete content may move it to another device by carrying out the moving process discussed above with reference to Fig. 13.

The server having provided the client with the discrete content now retains content data 523 without the corresponding license. The server is now incapable of allowing the clients except the one having the discrete content to use the same content on the same network as the server. That is, the content in question cannot be used as bound content.

As described above, content is guaranteed to be either in the bound state or in the discrete state. This arrangement ensures that content is used by properly taking copyrights into consideration.

The hardware structure of the server and client devices was described earlier with reference to Fig. 2. The steps and processes mentioned above are carried out by the CPU acting as a control unit in keeping with programs held in the storage unit of each of the server and clients.

The processes executed by the CPU of the server typically include member registration, content state shift, and content movement. These processes involve receiving and meeting requests coming from the clients.

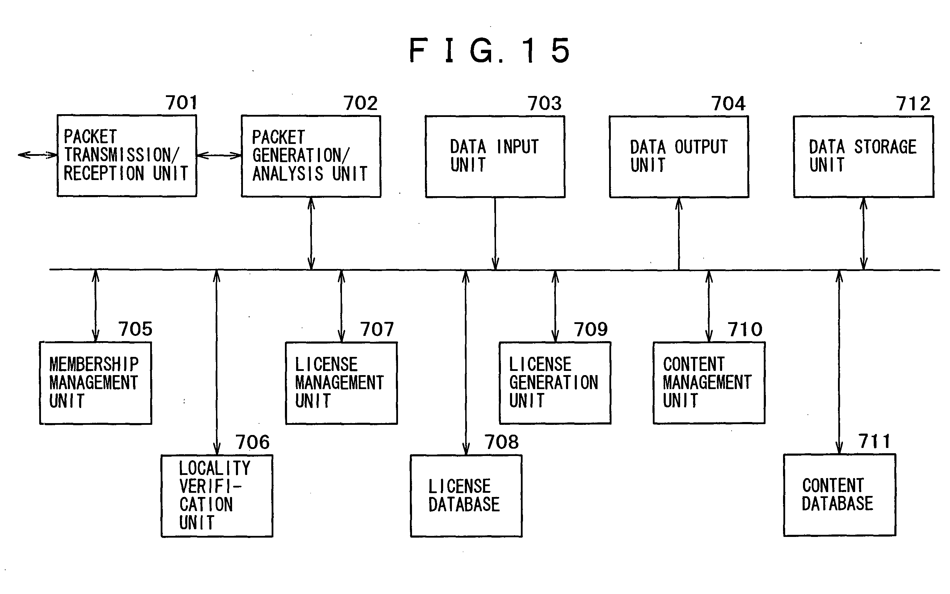

Basically, these processes are performed in accordance with previously stored processing programs under the control of the CPU acting as the control unit of the server. Outlined below with reference to Fig. 15 are some processes carried out by the CPU and the major data kept in its storage unit. Fig. 15 is a block diagram illustrating a typical structure of the major functions provided by the server.

A packet transmission/reception unit 701 sends and receives packets to and from clients and other entities. A packet generation/analysis unit 702 generates outgoing packets and analyzes incoming packets. In addition, the packet generation/analysis 702 performs such processes as setting and recognizing packet addresses, placing data into a data part of each packet, and acquiring data from the data parts of the packets.

A data input unit 703 is made up of a keyboard, a user interface, etc., for allowing the user to input data. A data output unit 704 is typically a display device that displays message data and other information. The data output unit 704 functions as a user interface that displays diverse messages during the member registration process and state shifting process.

A membership management unit 705 carries out membership management on clients. Specifically, the membership management unit 705 manages the member clients based on the member client list (see Fig. 4) held in a data storage unit 712.

The membership management unit 705 controls member registrations in keeping with the member registration processing sequence discussed above with reference to Fig. 5. A locality verification unit 706 checks the locality of a given client during member registration as described with reference to Fig. 5 or at the time of moving discrete content as explained with reference to Fig. 13. Specifically, the locality verification unit 706 checks to determine whether the requesting client is on the same home network as the server based on a source MAC address or shared secret information placed in a request packet.

A license management unit 707 provides overall control on the shifting of content and of the corresponding license between their bound state and their discrete state. The license management unit 707 further provides comprehensive control over the movement of content from one device to another.

A license database 708 stores license data placed in the bound state or in the discrete state. At the time of a state shift, the license database 708 under control of a license generation unit 709 updates license setting information so as to generate a license in the bound or discrete state replacing the license of the other state.

A content database 711 retains content placed in the bound state or discrete state. At the time of a state shift, the content database 711 under control of a content management unit 710 updates content attribute information in order to manage the attribute information settings in keeping with the bound or discrete content.

The data storage unit 712 accommodates not only the member client list but also data processing programs describing the processing sequences for diverse processes: the member registration process described with reference to Fig. 5; the state shifting process for replacing the discrete state with the bound state explained with reference to Figs. 8 and 9; the state shifting process for replacing the bound state with the discrete state depicted with reference to Figs. 11 and 12; the process for moving discrete content explained with reference to Fig. 13; and the state shifting process for replacing the bound state with the discrete state as requested by a client and described with reference to Figs. 14A and 14B.

The server basically possesses the functions outlined in Fig. 15. Under control of the CPU shown in Fig. 2, these functions execute the various processing programs.

The series of steps and processes described above may be executed by hardware, by software, or by the combination of both. For the software-based processing to take place, the programs constituting the processing sequences may be either loaded into an internal memory of a computer in its dedicated hardware for execution, or installed from a suitable storage medium into a general-purpose computer capable of executing diverse functions based on the installed programs.

Illustratively, the programs may be stored beforehand on such recording media as hard disks or a ROM (read only memory). The programs may alternatively be held (i.e., recorded) temporarily or permanently on removable recording media such as flexible disks, CD-ROMs (compact disc read only memories), MO (magneto-optical) disks, DVDs (digital versatile disks), magnetic disks, or semiconductor memories. These removable recording media may be offered to users as so-called package media.

The programs may be either installed into the computer from the above-mentioned removable recording media or transferred thereto from Web sites in wireless or wired fashion over the network such as a LAN (local area network) or the Internet. The computer receives the transferred programs and installs them onto internal storage media such as hard disks.

The processes described in this specification may be executed not only in the depicted sequence (i.e., on a time series basis) but also in parallel or individual fashion depending on the requirements or processing capability of the apparatus dealing with the processes in question. In this specification, the term "system" refers to a logical configuration of a plurality of component devices. Each of the devices may or may not be housed in a single enclosure.

As described and according to the invention, content is shifted between two states: the bound state in which content is allowed to be used by member clients on the local network, and the discrete state in which content is authorized for use outside the local network. At the time of a shift from one state to the other, attribute information on content and descriptive information on the license corresponding to the content are updated so as to shift the content usable states. Content is always placed in one of the above two states, and is never allowed to be in the two states simultaneously so that illicit uses of the content are prevented under a secure copyright management scheme.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

It is to be understood that while invention has been described in conjunction with specific embodiments, it is evident that many alternatives, modifications and variations will become apparent to those skilled in the art in light of the foregoing description. Accordingly, it is intended that the present invention embrace all such alternatives, modifications and variations as fall within the scope of the appended claims.

## Claims

1. An information processing apparatus operating as a content use management server, comprising:
a storage unit for storing a license as information for granting rights to use content, and content attribute information; and
a data processing unit for carrying out a content state shifting process in which to shift content usable states;
wherein said content usable states are formed by a bound state and a discrete state, said bound state referring to the state in which said content is allowed to be used by any of member clients on a local network of which said content use management server is a part, said discrete state referring to the state in which said content is allowed to be used only by a member client retaining said license for granting rights to use said content; and
wherein said data processing unit updates descriptive information on said license and said content attribute information stored in said storage unit in order to shift the two content states.

2. An information processing apparatus according to claim 1, wherein said data processing unit updates said content attribute information by establishing identification information on said content use management server as a local license administrator if said content is for use in said bound state, and by not establishing said identification information on said content use management server if said content is for use in said discrete state.

3. An information processing apparatus according to claim 1, wherein said data processing unit updates said descriptive information on said license by establishing information indicative of said license corresponding to said bound state if said content is for use in said bound state, and by not establishing said information indicative of the corresponding license if said content is for use in said discrete state.

4. An information processing apparatus according to claim 1, wherein said data processing unit outputs a license invalidation request to the member client retaining said license for granting rights to use said content in said bound sate in order to shift said content from said bound state to said discrete state.

5. An information processing apparatus according to claim 1, wherein, upon receipt of a request to shift said content from said bound state to said discrete state from a member client which is on the same local network as said content use management server and which retains said license for said content about which said request is made, said data processing unit updates said descriptive information and said content attribute information on the original license held by said content use management server, notifies the requesting client of the updated content attribute information, and moves the updated license to said requesting client.

6. An information processing apparatus comprising:
a storage unit for storing a license as information for granting rights to use content; and
a data processing unit for moving said license to a device;
wherein said data processing unit checks to determine whether said device to which to move said license belongs to a local network of which said information processing apparatus is a part, said data processing unit further moving said license to said device on condition that said device is found to be on the same local network as said information processing apparatus.

7. An information processing apparatus according to claim 6, wherein said data processing unit checks to determine, given a packet from a device requesting the movement of said license, whether the requesting device is on the same local network as said information processing apparatus on the basis of a media access control address in said packet indicative of where said packet was originated.

8. An information processing method for shifting usable states of content managed by a content use management server, said information processing method comprising the steps of:
inputting a request to shift the content usable states;
acquiring a license as information for granting rights to use said content and content attribute information from a storage unit; and
updating descriptive information on said license and said content attribute information in order to shift said content usable states formed by a bound state and a discrete state, said bound state referring to the state in which said content is allowed to be used by any of member clients on a local network of which said content use management server is a part, said discrete state referring to the state in which said content is allowed to be used only by a member client retaining said license for granting rights to use said content.

9. An information processing method according to claim 8, wherein the information updating step updates said content attribute information by establishing identification information on said content use management server as a local license administrator if said content is for use in said bound state, and by not establishing said identification information on said content use management server if said content is for use in said discrete state.

10. An information processing method according to claim 8, wherein the information updating step updates said descriptive information on said license by establishing information indicative of said license corresponding to said bound state if said content is for use in said bound state, and by not establishing said information if said content is for use in said discrete state.

11. An information processing method according to claim 8, further comprising the step of outputting a license invalidation request to the member client retaining the license for granting rights to use said content in said bound sate in order to shift said content from said bound state to said discrete state.

12. An information processing method according to claim 8, further comprising the steps of, upon receipt of a request to shift said content from said bound state to said discrete state from a member client which is on the same local network as said content use management server and which retains the license for said content about which said request is made:
updating said descriptive information and said content attribute information on the original license held by said content use management server;
notifying the requesting client of the updated content attribute information; and
moving the updated license to said requesting client.

13. An information processing method for use with an information processing apparatus, said information processing method comprising the steps of:
receiving from a device a request to move thereto a license as information for granting rights to use content;
checking to determine whether the requesting device to which to move said license belongs to a local network of which said information processing apparatus is a part; and
moving said license to said requesting device on condition that said requesting device is found to be on the same local network as said information processing apparatus.

14. An information processing method according to claim 13, wherein the checking step checks to determine, given a packet from the device requesting the movement of said license, whether said requesting device is on the same local network as said information processing apparatus on the basis of a media access control address in said packet indicative of where said packet was originated.

15. A computer program for shifting usable states of content managed by a content use management server, said computer program comprising the steps of:
inputting a request to shift the content usable states;
acquiring a license as information for granting rights to use said content and content attribute information from a storage unit; and
updating descriptive information on said license and said content attribute information in order to shift said content usable states formed by a bound state and a discrete state, said bound state referring to the state in which said content is allowed to be used by any of member clients on a local network of which said content use management server is a part, said discrete state referring to the state in which said content is allowed to be used only by a member client retaining said license for granting rights to use said content.

16. A computer program for use with an information processing apparatus in moving a license as information for granting rights to use content, said computer program comprising the steps of:
receiving from a device a request to move said license thereto;
checking to determine whether the requesting device to which to move said license belongs to a local network of which said information processing apparatus is a part; and
moving said license to said requesting device on condition that said requesting device is found to be on the same local network as said information processing apparatus.
